# FASCICULE DE BREVET EUROPEEN

(11) **EP 2 101 982 B1**
(45) Date de publication et mention de la délivrance du brevet: **02.03.2011**
(21) Numéro de dépôt: 04816467.7
(22) Date de dépôt: 22.12.2004
(51) Int. Cl.: B01D 46/24, F01N 3/022

(54) **BLOC POUR LA FILTRATION DE PARTICULES CONTENUES DANS LES GAZ D' ECHAPPEMENT D UN MOTEUR A COMBUSTION INTERNE**
BLOCK ZUM FILTERN VON IN ABGASEN EINES VERBRENNUNGSMOTORS ENTHALTENEN TEILCHEN
BLOCK FOR FILTERING PARTICLES CONTAINED IN EXHAUST GASES OF AN INTERNAL COMBUSTION ENGINE

(30) Priorité: 24.12.2003 FR 0315390
(43) Date de publication de la demande: 23.09.2009
(73) Titulaire: Saint-Gobain Centre de Recherches et d'Etudes Européen, 92400 Courbevoie (FR)
(72) Inventeur: BARDON, Sébastien SAINT-GOBAIN, 84306 Cavaillon Cedex (FR); BRIOT, Anthony, F-84000 AVIGNON (FR); GLEIZE, Vincent, F-84000 AVIGNON (FR)
(74) Mandataire: Sartorius, Jérome
(86) Numéro de dépôt international: PCT/FR2004/003339
(87) Numéro de publication internationale: WO 2005/063462

(56) Documents cités:
- EP-A- 0 867 222
- EP-A1- 1 125 704
- EP-A2- 1 384 507
- WO-A-02/089979
- WO-A1-03/002231
- FR-A- 2 698 316
- FR-A- 2 829 038
- US-A- 4 276 071

## Description

L'invention se rapporte à un bloc filtrant destiné notamment à la filtration de particules contenues dans les gaz d'échappement d'un moteur à combustion interne, comprenant des canaux d'entrée et de sortie périphériques disposés en alternance en périphérie dudit bloc et comportant chacun une paroi externe exposée à l'extérieur dudit bloc et une paroi interne disposée à l'intérieur dudit bloc.

L'invention se rapporte également à un corps formé par assemblage d'une pluralité de dits blocs, et à une filière d'extrusion de blocs selon l'invention.

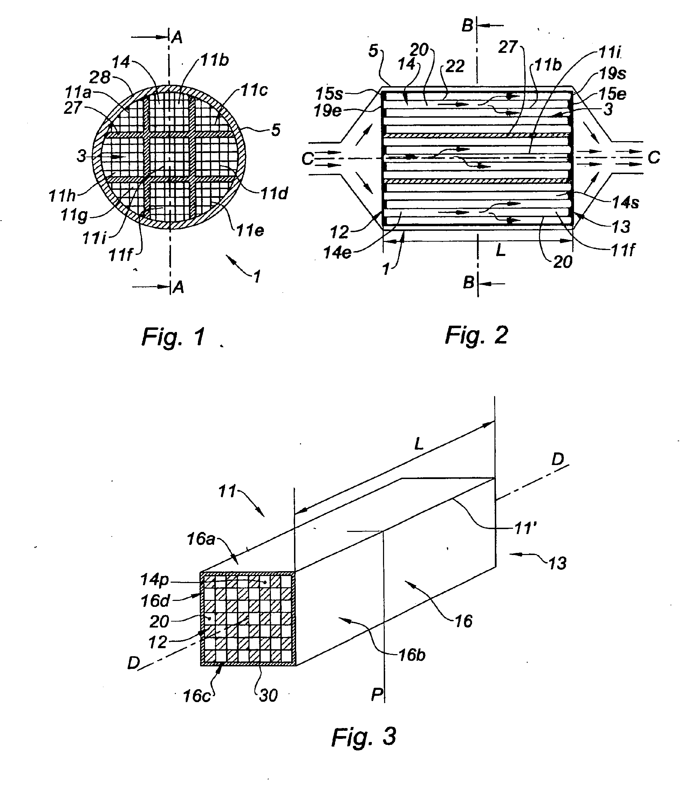

Classiquement, avant d'être évacués à l'air libre, les gaz d'échappement peuvent être purifiés au moyen d'un filtre à particules tel que celui représenté sur les figures 1 et 2, connu de la technique antérieure.

Un filtre à particules 1 est représenté sur la figure 1 en coupe transversale selon le plan de coupe B-B représenté sur la figure 2, et sur la figure 2 en coupe longitudinale selon le plan de coupe A-A représenté sur la figure 1.

Le filtre à particules 1 comporte classiquement au moins un corps filtrant 3, inséré dans une enveloppe métallique 5. Le corps filtrant 3 résulte de l'assemblage et de l'usinage d'une pluralité de blocs 11, référencés 11a-11i.

Par exemple, WO 03/002231 A décrit une structure en nid d'abeilles à capacité calorifique volumique variable, et EP 1 125 704 décrit une structure en nid d'abeilles à paroi ondulée.

Pour fabriquer un bloc 11, on extrude une matière céramique (cordiérite, carbure de silicium) de manière à former une structure poreuse en nid d'abeille. La structure poreuse extrudée a classiquement la forme d'un parallélépipède rectangle, comportant quatre arêtes longitudinales 11', s'étendant selon un axe D-D entre deux faces amont 12 et aval 13 sensiblement carrées sur lesquelles débouchent une pluralité de canaux 14 adjacents, rectilignes, parallèles à l'axe D-D.

Après extrusion, les structures poreuses extrudées sont alternativement bouchées sur la face amont 12 ou sur la face aval 13 par des bouchons amont 15s et aval 15e, respectivement, comme cela est bien connu, pour former des canaux de types « canaux de sortie » 14s et « canaux d'entrée » 14e, respectivement. A l'extrémité des canaux de sortie 14s et d'entrée 14e opposée aux bouchons amont 15s et aval 15e, respectivement, les canaux de sortie 14s et d'entrée 14e débouchent vers l'extérieur par des ouvertures de sortie 19s et d'entrée 19e, respectivement, s'étendant sur les faces aval 13 et amont 12, respectivement.

Chaque canal 14 définit ainsi un volume intérieur 20 délimité par la paroi latérale 22, un bouchon d'obturation 15s ou 15e, et une ouverture 19s ou 19e débouchant vers l'extérieur. Les canaux d'entrée 14e et de sortie 14s sont en communication de fluide par leurs parois latérales 22.

Les blocs 11a-11i sont assemblés entre eux par collage au moyen de joints 27 en ciment céramique généralement constitué de silice et/ou de carbure de silicium et/ou de nitrure d'aluminium. L'assemblage ainsi constitué peut être ensuite usiné pour prendre, par exemple, une section ronde. Ainsi les blocs extérieurs 11a, 11b, 11c, 11d, 11e, 11f, 11g, 11h présentent-ils une face externe arrondie par usinage.

II en résulte un corps filtrant 3 cylindrique d'axe C-C, qui peut être inséré dans l'enveloppe 5, un joint périphérique 28, étanche aux gaz d'échappement, étant disposé entre les blocs filtrants extérieurs 11a-11h et l'enveloppe 5.

Comme l'indiquent les flèches représentées sur la figure 2, le flux F des gaz d'échappement entre dans le corps filtrant 3 par les ouvertures 19e des canaux d'entrée 14e, traverse les parois latérales filtrantes 22 de ces canaux pour rejoindre les canaux de sortie 14s, puis s'échappe vers l'extérieur par les ouvertures 19s.

Après un certain temps d'utilisation, les particules, ou « suies », accumulées dans les canaux d'entrée 14e du corps filtrant 3 altèrent les performances du moteur. Pour cette raison, le corps filtrant 3 doit être régénéré régulièrement, par exemple tous les 500 kilomètres. La régénération, ou « décolmatage », consiste à oxyder les suies en les chauffant jusqu'à une température permettant leur inflammation.

Pendant les phases de régénération, les gaz d'échappement transportent vers l'aval toute l'énergie calorifique dégagée par la combustion des suies. De plus, les suies ne se déposant pas uniformément dans les différents canaux, les zones de combustion ne sont uniformément réparties dans le corps filtrant 3. Enfin, les zones périphériques du corps filtrant 3 sont refroidies, à travers l'enveloppe métallique 5, par l'air environnant.

II en résulte que la température diffère selon les zones du corps filtrant 3 et ne varie pas uniformément. L'inhomogénéité des températures au sein du corps filtrant 3 et les différences de nature des matériaux utilisés pour les blocs filtrants 11a-11i d'une part et pour les joints 27 d'autre part, génèrent des contraintes locales de fortes amplitudes pouvant conduire à des ruptures ou à des fissures locales. En particulier, les contraintes locales aux interfaces entre les blocs 11a-11h et l'enveloppe 5, et entre les blocs 11a-11i et les joints 27, peuvent conduire à des fissures au sein des blocs 11a-11i diminuant ainsi la durée de vie du filtre à particules 1.

Le but de l'invention est de fournir un nouveau bloc 11 apte à diminuer ce risque de fissures.

On atteint ce but au moyen d'un bloc filtrant destiné notamment à la filtration de particules contenues dans les gaz d'échappement d'un moteur à combustion interne, comprenant des canaux d'entrée et de sortie périphériques disposés en alternance en périphérie dudit bloc et comportant chacun une paroi externe exposée à l'extérieur dudit bloc et une paroi interne disposée à l'intérieur dudit bloc.

Le bloc filtrant selon l'invention est remarquable en ce qu'il comporte au moins un groupe de deux canaux périphériques adjacents tels que, dans un plan de coupe transversal, le rapport R* de l'épaisseur minimale « Eₘᵢₙ » de l'ensemble des parois externes dudit groupe sur l'épaisseur moyenne « e » de l'ensemble des parois internes dudit groupe est supérieur à 1,2.

Comme on le verra plus en détail dans la suite de la description, l'épaisseur moyenne de la paroi périphérique formée par les parois externes des canaux dudit groupe est donc augmentée, ce qui renforce localement le bloc et ainsi avantageusement limite les risques de fissures.

La paroi périphérique a localement, au droit des canaux périphériques qu'elle recouvre, une épaisseur moyenne supérieure à l'épaisseur moyenne des parois internes de ces canaux. La paroi périphérique présente ainsi une « surépaisseur moyenne », ce qui n'exclut pas que, sur une portion des parois externes considérées, par exemple sur la largeur d'un desdits canaux, voire au-delà, l'épaisseur de la paroi périphérique puisse être inférieure à 1,2 fois l'épaisseur moyenne des parois internes de ces canaux.

Dans ledit plan de coupe transversal, l'épaisseur des parois externes des canaux dudit groupe est supérieure ou égale, en tout point, à l'épaisseur moyenne « e » de l'ensemble des parois internes de ces canaux.

Encore, dans ledit plan de coupe transversal, le rapport R* de l'épaisseur minimale « Eₘᵢₙ» de l'ensemble des parois externes dudit groupe sur l'épaisseur moyenne « e » de l'ensemble des parois internes dudit groupe est supérieur à 1,2. La résistance à la fissuration en est encore améliorée.

L'invention se rapporte également à un corps filtrant destiné à un filtre à particules, remarquable en ce qu'il comporte au moins bloc filtrant selon l'invention.

L'invention se rapporte aussi à une filière d'extrusion conformée de manière à former, par extrusion d'une matière céramique, une structure pourvue de canaux convenant à la fabrication d'un bloc filtrant selon l'invention.

La description qui va suivre, faite en se référant aux dessins annexés, permettra de mieux comprendre et apprécier les avantages de l'invention. Dans ces dessins :
- la figure 1 représente un filtre à particules selon la technique antérieure, en coupe transversale selon le plan de coupe transversal B-B représenté sur la figure 2 ;
- la figure 2 représente le même filtre à particules, selon le plan de coupe longitudinale A-A représenté sur la figure 1 ;
- la figure 3 représente en perspective un bloc selon l'invention, dans le mode de réalisation préféré ;
- la figure 4 représente schématiquement un bloc filtrant selon l'invention en coupe transversale selon un plan transversal P, en regardant vers la face aval du bloc ;
- la figure 5 représente un détail de la figure 4 ;
- les figures 6 et 7 représentent, en vue de dessus, des coupes longitudinales, selon un plan médian M tel que représenté sur la figure 8, de corps filtrants constitués de 16 blocs selon l'invention et hors invention, respectivement, après avoir subi des tests de régénération sévère ;
- la figure 8 représente en coupe transversale, un corps filtrant mis en oeuvre pour lesdits tests.

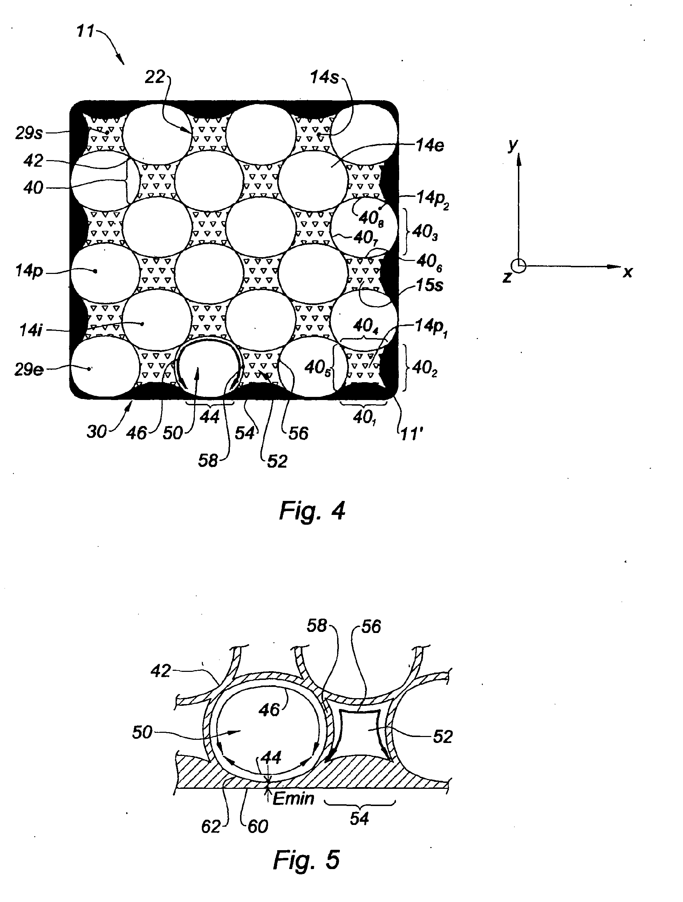

Pour améliorer la clarté de la figure 4, le nombre de canaux représentés est très inférieur à celui des blocs filtrants classiquement commercialisés.

Sur ces figures, non limitatives, les différents éléments ne sont pas nécessairement représentés à la même échelle. En particulier, l'épaisseur des parois séparant les différents canaux n'est pas à l'échelle et ne constitue pas une limite à l'invention.

Des références identiques ont été utilisées sur les différentes figures pour désigner des éléments identiques ou similaires.

Les figures 1, 2 et 3 ayant été décrites en préambule, on se reporte à la figure 4, également partiellement décrite ci-dessus.

Le bloc 11 représenté en détail sur la figure 4 comporte des ensembles de canaux d'entrée 14e et de canaux de sortie 14s adjacents, agencés les uns par rapport aux autres de manière que l'intégralité du gaz filtré par un canal d'entrée quelconque passe dans des canaux de sortie adjacents audit canal d'entrée. Avantageusement, il n'existe pas de zone(s) d'un ou plusieurs canal(aux) d'entrée qui débouche(nt) dans un autre canal d'entrée, zone(s) qui ne peu(ven)t être utile(s) à la filtration puisque les gaz d'échappement peuvent la (les) traverser dans les deux sens. La surface de filtration disponible pour un volume de bloc filtrant déterminé en est optimisée.

De préférence, les canaux d'entrée 14e et de sortie 14s sont parallèles et rectilignes suivant la longueur L du bloc filtrant. Avantageusement, il est ainsi possible de fabriquer par extrusion la structure en nid d'abeille convenant à la fabrication d'un bloc filtrant selon l'invention.

Les ensembles de canaux d'entrée 14e et de canaux de sortie 14s sont imbriqués l'un dans l'autre de manière à former, en section transversale, un motif en damier où lesdits canaux d'entrée alternent avec lesdits canaux de sortie, dans le sens de la hauteur (direction y) comme dans celui de la largeur (direction x).

On appelle « canaux d'angle » les canaux d'entrée 29e et de sortie 29s qui délimitent une arête 11' du bloc 11.

Dans un plan de coupe transversal quelconque, tous les canaux d'entrée 14e ont une section transversale identique, sensiblement constante sur toute la longueur L du bloc. De même, tous les canaux de sortie 14s ont une section transversale identique, sensiblement constante sur toute la longueur L du bloc. La fabrication des blocs filtrants en est facilitée.

Dans le mode de réalisation préféré de l'invention représenté sur la figure 4, la section transversale des canaux d'entrée 14e est différente de celle des canaux de sortie 14s. De préférence, les sections transversales des canaux d'entrée 14e sont supérieures à celles des canaux de sortie 14s, afin d'accroître le volume global des canaux d'entrée aux dépens de celui des canaux de sortie. La capacité de stockage des suies en est avantageusement augmentée.

A cet effet, les canaux d'entrée 14e et de sortie 14s sont délimités par des éléments de paroi 40 non plans, de préférence concaves du côté des canaux d'entrée 14e et convexes du côté des canaux de sortie 14s.

On appelle « élément de paroi » une portion de la paroi latérale 22 d'un canal délimitée par des jointures 42. On appelle « jointure » la limite d'une portion de paroi latérale partagée avec un canal adjacent. Pour un canal intérieur, cette ligne correspond à une zone de jonction entre les parois latérales de deux canaux du même type. Pour un réseau de canaux de section carrée, les jointures d'un canal sont donc les « coins » ou « cornières » du volume intérieur 20.

De préférence, les éléments de paroi 40 se succèdent, en coupe transversale et en suivant un rang horizontal (selon l'axe x) ou vertical (selon l'axe y) de canaux, pour définir une forme sinusoïdale ou « en vague » (« wavy » en anglais). Les éléments de paroi 40 ondulent sensiblement d'une demi période de sinusoïde sur la largeur d'un canal.

On appelle « canaux périphériques » 14p les canaux localisés à la périphérie d'un bloc 11. La paroi latérale 22 des canaux périphériques 14p-comporte une paroi externe 44, c'est-à-dire en contact avec l'extérieur du bloc 11, et une paroi interne 46, c'est-à-dire partagée avec des canaux adjacents. La paroi externe 44 comporte deux (40₁, 40₂) ou un (40₃) élément(s) de paroi, selon que le canal considéré, 14p₁ et 14p₂ respectivement, est un canal d'angle ou pas. De même, la paroi interne 44 comporte deux (40₄ et 40₅) ou trois (40₆, 40₇, 40₈) élément(s) de paroi respectivement, selon que le canal considéré, 14p₁ et 14p₂ respectivement, est un canal d'angle ou pas.

Les parois externes 44 des canaux périphériques constituent une paroi périphérique latérale 30, formant les quatre faces 16a-d de la surface extérieure 16 du bloc filtrant 11.

Soit un groupe G de deux canaux périphériques adjacents 50 et 52. La paroi latérale du canal 50 est constituée par une paroi externe 44 et une paroi interne 46. La paroi latérale du canal 52 est constituée par une paroi externe 54 et une paroi interne 56. Ce groupe comporte nécessairement un canal d'entrée 50 et un canal de sortie 52, séparés par un élément de paroi commun 58. On désigne par « E » et par « e » l'épaisseur moyenne des deux parois externes 44 et 54 et des deux parois internes 46 et 56 de ce groupe, respectivement, mesurée dans le plan de coupe transversal P. Pour mesurer une épaisseur d'une paroi d'un canal, on se place au droit de cette paroi, ce qui exclut toute mesure d'épaisseur dans les coins du volume intérieur de ce canal.

On appelle R le rapport E/e et R* le rapport Eₘᵢₙ/e de l'épaisseur minimale « Eₘᵢₙ » de l'ensemble des parois externes 44 et 54 dudit groupe G sur l'épaisseur moyenne « e ».

Selon l'invention, R*, et de préférence R , est supérieur à 1,2, de préférence supérieur à 1,5. De préférence encore le rapport R, et de préférence R*, est supérieur à 1,9 et, de préférence, inférieur à 2,1. Un rapport R, et de préférence R*, sensiblement égal à 2 est préféré entre tous.

De préférence, le rapport R et/ou le rapport R* est constant quel que soit ledit plan de coupe transversal P considéré.

De préférence tous les groupes G possibles de deux canaux périphériques adjacents ne comportant pas un canal d'angle présentent un rapport R ou R* selon l'invention, de préférence identique pour tous ces groupes. De préférence encore, tous les groupes comportant un canal d'angle présentent également un rapport R ou R* selon l'invention, de préférence identique pour tous ces groupes.

De préférence, les éléments de paroi des parois externes des canaux d'angle ont un profil identique aux éléments de paroi des parois externes des canaux du même type des groupes ne comportant pas de canal d'angle.

De préférence, dans le plan de coupe P, l'épaisseur moyenne de la paroi périphérique du bloc 11 est sensiblement égale à l'épaisseur moyenne « E » d'un groupe G quelconque de deux canaux périphériques adjacents ne comportant pas de canal d'angle. De préférence l'épaisseur moyenne E et/ou l'épaisseur minimale Eₘᵢₙ est constante sur toute la longueur L du bloc.

La paroi périphérique 30 du bloc 11 est ainsi renforcée par une « surépaisseur moyenne » de matière disposée régulièrement sur les quatre faces 16a-d, et s'étendant sur toute la longueur « L » du bloc 11, depuis la face amont 12 jusqu'à la face aval 13.

De préférence, si on considère un groupe de deux canaux périphériques adjacents, l'épaisseur moyenne de la paroi externe du canal de sortie est supérieure à l'épaisseur moyenne de la paroi externe du canal d'entrée.

De préférence, la face extérieure 60 des parois externes 44 et 54 des canaux périphériques 50 et 52 est sensiblement plane et la face intérieure 62 a une forme de sinusoïde ou d'une fraction de sinusoïde.

De préférence encore, les parois externes des canaux périphériques sont conformées de manière que les quatre faces 16a-d du bloc 11 sont planes. Avantageusement, la manipulation du bloc et son stockage en sont facilités, ce qui est particulièrement utile en cas d'automatisation de la fabrication.

On appelle « canaux intérieurs » 14i les canaux localisés à l'intérieur du bloc 11, c'est-à-dire ne comportant pas de paroi externe.

De préférence, la surépaisseur moyenne de la paroi périphérique du bloc est disposée de manière que, dans un plan de coupe transversale P quelconque, les sections de passage des canaux périphériques 14p d'entrée et de sortie soient sensiblement identiques à celles des canaux intérieurs 14i d'entrée et de sortie, respectivement. Avantageusement, l'application d'une surépaisseur ne modifie donc pas les volumes des canaux périphériques 14p et donc l'efficacité globale du bloc filtrant 11.

De préférence, le bloc selon l'invention est monobloc et fabriqué par extrusion au moyen d'une filière adaptée, selon des techniques connues de l'homme du métier. La « surépaisseur moyenne » de la paroi périphérique n'est pas rapportée sur le bloc filtrant, mais est venue de matière avec lui. La rigidité du bloc filtrant et sa résistance à la fissuration en sont avantageusement améliorées. En outre, tout risque de décollement de matière formant la surépaisseur est ainsi avantageusement écarté. Enfin, la fabrication du bloc filtrant en est simplifiée.

Après assemblage, un ensemble de blocs filtrants selon la présente invention forme une structure présentant des surépaisseurs locales. De préférence, ces surépaisseurs sont réparties de manière sensiblement uniforme.

Après usinage éventuel de cette structure de manière à former un corps filtrant, une surépaisseur de matière peut être ajoutée en périphérie du corps filtrant. Le risque de fissures en est encore diminué.

De préférence, les blocs assemblés comportent des parois périphériques 30 présentant des « surépaisseurs moyennes » (c'est-à-dire en considérant la moyenne des épaisseurs des parois externes de groupes de deux canaux périphériques) régulièrement réparties à la surface extérieure des blocs.

II résulte ainsi de l'assemblage des blocs un réseau interne de surépaisseurs au sein du corps filtrant améliorant sa résistance à la fissuration.

Dans un mode de réalisation de l'invention, toutes les parois périphériques 30 de tous les blocs assemblés présentent une épaisseur constante au moins 1,2 fois plus grande que l'épaisseur moyenne des parois internes des canaux intérieurs de ces blocs. Après assemblage, les surépaisseurs périphériques des blocs forment ainsi, en coupe transversale, un quadrillage renforçant considérablement la résistance à la fissuration par rapport à un corps filtrant qui ne présenterait qu'une surépaisseur à sa périphérie.

II est préférable que la surépaisseur autour des blocs varie régulièrement, de préférence de manière sensiblement sinusoïdale, de manière à augmenter le volume des canaux d'entrée par rapport au volume des canaux de sortie, comme représenté sur la figure 4.

De préférence encore, quel que soit le mode de réalisation, l'épaisseur des parois internes 56 des canaux périphériques est identique à l'épaisseur des parois des canaux intérieurs. L'efficacité de la filtration à travers toutes les parois internes est ainsi sensiblement la même, quelle que soit la paroi interne considérée.

La fabrication du corps filtrant en est également simplifiée, les blocs filtrants pouvant être assemblés indifféremment à une position quelconque au sein du corps filtrant.

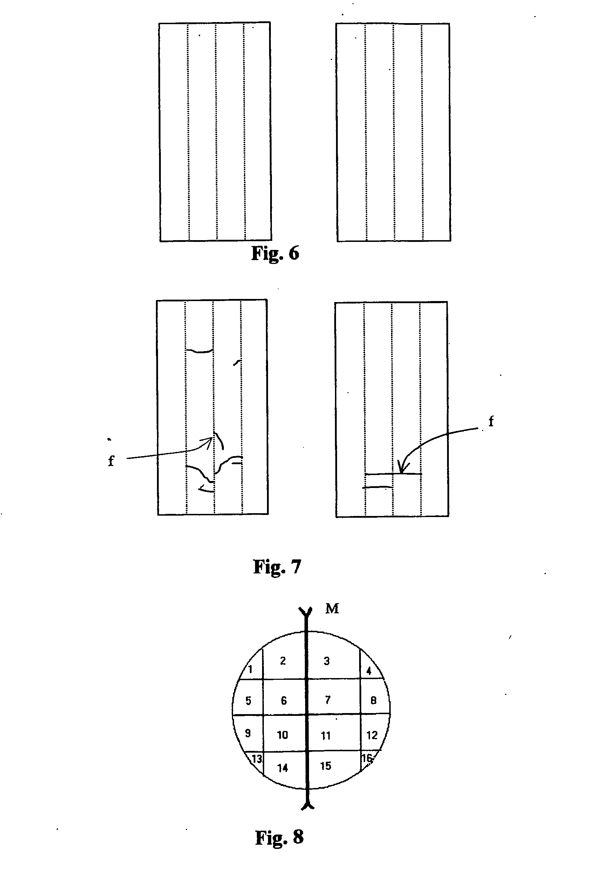

Des tests ont été effectués pour évaluer la résistance à la fissuration d'un corps filtrant composé de 16 blocs filtrants classiques (figure 7) et d'un corps filtrant composé de 16 blocs du même type mais comportant, comme le bloc représenté sur la figure 4, une paroi périphérique 30 renforcée selon l'invention (figure 6). Ces deux corps filtrants ont été soumis à une régénération sévère (correspondant à un régime moteur de 120 km/heure, puis passage au ralenti suivi d'une post-injection) à 5 g/l sur banc moteur. Les blocs filtrants ont ensuite été coupés longitudinalement selon un plan médian. On observe ainsi les coupes longitudinales de quatre blocs filtrants. Une comparaison des coupes longitudinales représentées sur les figures 6 et 7 montre clairement que les blocs selon l'invention ne présentent pas de fissures, à la différence des blocs selon la technique antérieur qui présentent des fissures « f » d'une longueur généralement supérieure à 0,5 mm et pouvant s'étendre sur toute la longueur L du bloc. Des fissures sont visibles à l'oeil nu et au microscope.

Comme cela apparaît clairement à présent, le bloc filtrant à structure renforcée selon l'invention présente une meilleure résistance à la fissuration que les blocs selon la technique antérieure.

Bien entendu, la présente invention n'est pas limitée au mode de réalisation décrit et représenté ci-dessus, fourni à titre illustratif et non limitatif.

Ainsi, tous les groupes de deux canaux périphériques adjacents n'ont-ils pas nécessairement la même conformation.

La surépaisseur des parois externes d'un groupe de deux canaux périphériques adjacents ne s'étend pas nécessairement sur toute la longueur L du bloc. La surépaisseur évolue périodiquement ou non, dans un plan longitudinal ou transversal. Avantageusement, il est ainsi possible d'adapter l'épaisseur de la cloison de renfort à l'intensité des contraintes thermo-mécaniques locales.

La section transversale d'un canal pourrait aussi évoluer, périodiquement ou non, le long de ce canal.

Tous les groupes de deux canaux périphériques adjacents du bloc ne comportent pas non plus des parois externes présentant une surépaisseur, même si cela est préférable pour améliorer la résistance à la fissuration du bloc.

De préférence, au moins les groupes de deux canaux périphériques adjacents comprenant un canal d'angle présentent une surépaisseur selon l'invention.

La forme, en particulier la section, les dimensions et le nombre des canaux ne sont pas limitatifs. La section des canaux d'entrée pourrait également être identique à celle des canaux de sortie.

Les canaux périphériques peuvent également avoir une section différente des canaux intérieurs du même type, par exemple du fait qu'ils ont été tronqués lors de l'usinage du bloc.

Le bloc filtrant 11 peut avoir une forme quelconque.

Il est également possible de ménager une surépaisseur à la surface du bloc 11 en y fixant de la matière supplémentaire par collage, soudage ou tout autre technique connue. La matière rapportée peut être identique ou différente de la matière constituant le bloc 11. Une surépaisseur de matière est de préférence appliquée, après extrusion et avant frittage, sur les faces des blocs ayant été usinées, par exemple sur les faces externes arrondies des blocs 11a-11b.

Le procédé de fabrication d'un bloc filtrant selon l'invention peut alors comprendre les étapes successives suivantes :
a) extrusion d'une matière céramique de manière à former une structure poreuse en nid d'abeille,
b) application d'une surépaisseur d'une matière, identique ou différente de ladite matière céramique, sur au moins une partie de la surface extérieure de ladite structure poreuse, et
c) séchage et frittage de ladite structure poreuse pour obtenir un bloc filtrant.
Optionnellement, la structure poreuse peut être séchée entre les étapes a) et b), puis usinée, la surépaisseur de matière étant de préférence appliquée au moins sur une partie de ladite surface extérieure ayant été usinée.

## Revendications

1. Corps filtrant destiné à un filtre à particules de gaz d'échappement d'un moteur à combustion interne, ledit corps filtrant comportant au moins un bloc filtrant monobloc, comprenant des canaux d'entrée (50,14p₂) et de sortie (52,14p₁) périphériques disposés en alternance en périphérie dudit bloc filtrant et comportant chacun une paroi externe (44;54 ;40₁,40₂;40₃) exposée à l'extérieur dudit bloc filtrant et une paroi interne (46 ;56 ;40₄,40₅ ;40₆,40₇,40₈) disposée à l'intérieur dudit bloc filtrant, **caractérisé en ce que** ledit bloc filtrant comporte au moins un groupe (G) de deux canaux périphériques adjacents (50,52) tels que, dans un plan de coupe transversal (P), le rapport « R* » de l'épaisseur minimale « Eₘᵢₙ » de l'ensemble des parois externes (44,54) dudit groupe (G) sur l'épaisseur moyenne « e » de l'ensemble des parois internes (46,56) dudit groupe (G) est supérieur à 1,2, lesdites parois externes (44,54) présentant ainsi une « surépaisseur », ladite surépaisseur évoluant, périodiquement ou non, dans un plan longitudinal ou transversal.

2. Corps filtrant selon la revendication 1, **caractérisé en ce que** ledit rapport « R » de l'épaisseur moyenne « E » de l'ensemble des parois externes (44,54) dudit groupe (G) sur l'épaisseur moyenne « e » de l'ensemble des parois internes (46,56) dudit groupe (G) ou ledit rapport « R* » est constant quel que soit ledit plan de coupe transversal (P) considéré.

3. Corps selon l'une quelconque des revendications précédentes, **caractérisé en ce que** la section transversale dudit canal d'entrée (50) ou de sortie (52) dudit groupe (G) ou ladite épaisseur moyenne « E » ou ladite épaisseur minimale « Eₘᵢₙ » est constante sur toute la longueur (L) dudit bloc filtrant (11).

4. Corps filtrant selon l'une quelconque des revendications précédentes, **caractérisé en ce que** le rapport « R » de l'épaisseur moyenne « E » de l'ensemble des parois externes (44,54) dudit groupe (G) sur l'épaisseur moyenne « e » de l'ensemble des parois internes (46,56) dudit groupe (G) ou ledit rapport « R* » est compris entre 1,9 et 2,1.

5. Corps filtrant selon l'une quelconque des revendications précédentes, **caractérisé en ce que** l'épaisseur moyenne de la paroi externe du canal de sortie dudit groupe (G) est supérieure à l'épaisseur moyenne de la paroi externe du canal d'entrée dudit groupe (G).

6. Corps filtrant selon l'une quelconque des revendications précédentes, **caractérisé en ce que**, dans un plan de coupe transversal (P) quelconque, tous lesdits canaux d'entrée (14e) ont une section transversale identique, et tous lesdits canaux de sortie (14s) ont une section transversale identique, ladite section transversale desdits canaux d'entrée étant d'une superficie supérieure à celle desdits canaux de sortie.

7. Corps filtrant selon l'une quelconque des revendications précédentes, **caractérisé en ce qu'**il comporte au moins un canal d'entrée (14e) et un canal de sortie (14s) séparés par un élément de paroi (40) non plan.

8. Corps filtrant selon la revendication 7, **caractérisé en ce que** ledit élément de paroi non plan (40) présente, en coupe transversale, au moins une face ayant une forme de sinusoïde ou d'une fraction de sinusoïde.

9. Corps filtrant selon l'une quelconque des revendications précédentes, **caractérisé en ce que** lesdites parois externes (44,54) dudit groupe (G) présentent une face extérieure (60) plante.

10. Corps filtrant selon l'une quelconque des revendications précédentes, **caractérisé en ce que** chaque ensemble de deux canaux périphériques adjacents dudit bloc filtrant ne comportant pas un canal (14p₁) délimitant une arête (11') dudit bloc filtrant, est un dit groupe (G).

11. Corps filtrant selon l'une quelconque des revendications précédentes, **caractérisé en ce que** chaque ensemble de deux canaux périphériques adjacents dudit bloc filtrant comportant un canal délimitant une arête dudit bloc filtrant est un dit groupe (G).

12. Corps filtrant selon l'une quelconque des revendications précédentes, **caractérisé en ce que**, dans ledit plan de coupe (P), l'épaisseur minimale d'une paroi périphérique (30) dudit bloc filtrant (11) est égale à ladite épaisseur « Eₘᵢₙ » d'un groupe quelconque de deux canaux périphériques adjacents ne délimitant pas une arête dudit bloc filtrant.

13. Corps filtrant selon l'une quelconque des revendications précédentes, **caractérisé en ce qu'**au moins les groupes de deux canaux périphériques adjacents comprenant un canal d'angle dudit bloc filtrant appartiennent à un dit groupe (G).

14. Corps filtrant selon la revendication immédiatement précédente, **caractérisé en ce que** tous lesdits groupes (G) dudit bloc filtrant comportant un canal d'angle présentent un rapport R de l'épaisseur moyenne « E » de l'ensemble des parois externes (44,54) dudit groupe (G) sur l'épaisseur moyenne « e » de l'ensemble des parois internes (46,56) dudit groupe (G) ou un rapport R* identique.

15. Corps filtrant selon l'une quelconque des revendications précédentes, **caractérisé en ce que** les éléments de paroi des parois externes des canaux d'angle dudit bloc filtrant ont un profil identique aux éléments de paroi des parois externes des canaux du même type des groupes ne comportant pas de canal d'angle.

16. Corps filtrant selon l'une quelconque des revendications précédentes, **caractérisé en ce que** ledit bloc filtrant présente une cloison de renfort dont l'épaisseur est adaptée à l'intensité des contraintes thermo-mécaniques locales.

17. Corps filtrant selon l'une quelconque des revendications précédentes, formant une structure présentant localement desdits groupes (G), c'est-à-dire présentant des surépaisseurs locales, lesdites surépaisseurs étant réparties de manière uniforme.

18. Corps filtrant selon l'une quelconque des revendications précédentes, **caractérisé en ce que** ledit bloc filtrant présente la forme d'un parallélépipède rectangle.

19. Corps filtrant selon l'une quelconque des revendications précédentes, dans lequel ledit bloc filtrant est fabriqué par extrusion.

20. Corps filtrant selon l'une quelconque des revendications précédentes, l'épaisseur des parois internes des canaux périphériques dudit bloc filtrant étant identique à l'épaisseur des parois des canaux intérieurs dudit bloc filtrant.

21. Corps filtrant selon l'une quelconque des revendications précédentes, dans lequel ledit bloc filtrant comporte des ensembles de canaux d'entrée (14e) et de canaux de sortie (14s) adjacents, agencés les uns par rapport aux autres de manière que l'intégralité du gaz filtré par un canal d'entrée quelconque passe dans des canaux de sortie adjacents audit canal d'entrée.

## Claims

1. A filter body for a filter for filtering particulates present in the exhaust gases of an internal combustion engine, said filter body comprising at least one monolithic fiter block comprising peripheral inlet (50,14p₂) and outlet (52,14p₁) channels arranged alternately at the periphery of said filter block and each comprising an external wall (44;54 ;40₁,40₂;40₃) exposed to the exterior of said filter block and an internal wall (46 ;56 ;40₄,40₅ ;40₆,40₇,40₈) arranged inside said filter block, **characterized in that** said filter block comprises at least one group (G) of two adjacent peripheral channels (50,52) such that, in a transverse plane of section (P), the ratio "R*" of the minimum thickness "Eₘᵢₙ" of all the external walls (44,54) of said group (G) to the average thickness "e" of all the internal walls (46,56) of said group (G) is greater than 1.2, said external walls therefore presenting an "average reinforcement", said average reinforcement evolving, periodically or not, in a transverse or longitudinal plane.

2. The filter body as claimed in claim 1, , **characterized in that** said ratio "R" of the average thickness "E" of all the external walls (44,54) of said group (G) to the average thickness "e" of all the internal walls (46,56) of said group (G) or said ratio "R*" is constant irrespective of the transverse plane of section (P) considered.

3. The body as claimed in any one of the preceding claims, **characterized in that** the transverse cross section of said inlet (50) or outlet (52) channel of said group (G) or said average thickness "E" or said minimum thickness "Eₘᵢₙ" is constant along the whole length (L) of said filter block (11).

4. The filter body as claimed in any one of the preceding claims, **characterized in that** said ratio "R" of the average thickness "E" of all the external walls (44,54) of said group (G) to the average thickness "e" of all the internal walls (46,56) of said group (G) or said ratio "R*" is between 1.9 and 2.1.

5. The filter body as claimed in any one of the preceding claims, **characterized in that** the average thickness of the external wall of the outlet channel of said: group (G) is greater than the average thickness of the external wall of the inlet channel of said group (G).

6. The filter body as claimed in any one of the preceding claims, **characterized in that**, in any transverse plane of section (P), all said inlet channels (14e) have an identical transverse cross section, and all said outlet channels (14s) have an identical transverse cross section, a surface area of said transverse cross section of said inlet channels being greater than a surface area of said transverse cross section of said outlet channels.

7. The filter body as claimed in any one of the preceding claims, **characterized in that** it comprises at least one inlet channel (14e) and one outlet channel (14s) separated by a nonplane wall element (40).

8. The filter body as claimed in claim 7, **characterized in that** said nonplane wall element (40) has, in transverse cross section, at least one face having the shape of a sinusoid or a fraction of sinusoid.

9. The filter body as claimed in any one of the preceding claims, **characterized in that** said external walls (44, 54) of said group (G) have a plane external face (60).

10. The filter body as claimed in any one of the preceding claims, **characterized in that** each set of two adjacent peripheral channels of said filter block not comprising a channel (14p₁) bounding an edge (11') of said filter block is a said group (G).

11. The filter body as claimed in any one of the preceding claims, **characterized in that** each set of two adjacent peripheral channels of said filter block comprising a channel bounding an edge of said filter block is a said group (G).

12. The filter body as claimed in any one of the preceding claims, **characterized in that**, in said plane of section (P), the minimum thickness of a peripheral wall (30) of said filter block (11) is equal to said thickness "Eₘᵢₙ" of any group of two adjacent peripheral channels not bounding an edge of said filter block.

13. The filter body as claimed in any one of the preceding claims, **characterized in that** at least the groups of two adjacent peripheral channels comprising a corner channel of said filter block is a said group (G).

14. The filter body according to the immediately preceding claim, **characterized in that** all said groups (G) of said filter block comprising a corner channel present a ratio R of the average thickness "E" of all the external walls (44,54) of said group (G) to the average thickness "e" of all the internal walls (46,56) of said group (G) or a ratio R* identical.

15. The filter body according to any one of the preceding claims, **characterized in that** the wall elements of the external walls of the corner channels of said filter block have an identical profile to the wall elements of the external walls of the channels of the same type of the groups not comprising a corner channel.

16. The filter body as claimed in any one of the preceding claims, **characterized in that** the said filter block present a reinforcement partition, the thickness of the reinforcing partition being adapted to the intensity of the local thermomechanical stresses.

17. The filter body as claimed in any one of the preceding claims, forming a structure presenting locally said groups (G), i.e. presenting local reinforcements, said reinforcements being uniformly distributed.

18. The filter body as claimed in any one of the preceding claims, **characterized in that** said filter block is rectangular parallelepiped shaped.

19. Filter body as claimed in any one of the preceding claims, wherein said filter block is fabricated by extrusion.

20. The filter body as claimed in any one the preceding claims, in which the thickness of the internal walls of the peripheral channels is identical to the thickness of the walls of the internal channels of said filter block.

21. The filter body as claimed in any one of the preceding claims, wherein said filter block comprises sets of adjacent inlet channels (14e) and outlet channels (14s), arranged against each other such as all the gas filtered by an inlet channel pass trough the outlet channels adjacent to said inlet channel.

## Patentansprüche

1. Filterkörper für einen Filter für Teilchen aus den Abgasen eines Verbrennungsmotors, wobei besagter Filterkörper mindestens einen als Monoblock ausgebildeten Filterblock aufweist, welcher äusseren Eintrittskanäle (50, 14 p₂) und Ausgangskanäle (52, 14 P₁) aufweist, die am Rand im regelmäßige Wechsel in der Periphere des Filterblocks angeordnet sind und die jeweils eine äußere Trennwand (44; 54; 40₁; 40₂; 40₃) aufweisen, welche zur Aussenseite des Filterblocks ausgerichtet ist, sowie eine innere Zwischenwand (46; 56; 40₄; 40₅, 40₆, 40₇, 40₈), die im inneren des Filterblocks angeordnet ist,
**dadurch gekennzeichnet,**
**dass** der Filterblock mindestens eine Gruppe (G) von zwei benachbarten äusseren Kanälen (50, 52) aufweist, derart, dass in einer Querschnittsebene (P) das Verhältnis "R*" der minimalen Dicke "Eₘᵢₙ" der Gesamtheit der äußeren Zwischenwände (44, 54) der Gruppe (G) zur mittleren Dicke "e" der Gesamtheit der inneren Zwischenwände (46, 56) der Gruppe (G) größer als 1,2 ist, wobei die äußeren Zwischenwände (44, 54) somit eine "Überdicke" darstellen, wobei sich die Überdicke in einer longitudinalen oder transversalen Ebene periodisch oder nicht entwickelt.

2. Filterkörper nach Anspruch 1,
**dadurch gekennzeichnet,**
**dass** das Verhältnis "R" der mittleren Dicke "E" der Gesamtheit der äusseren Zwischenwände (44, 54) der Gruppe (G) zur mittleren Dicke "e" der Gesamtheit der inneren Zwischenwände (46, 56) der Gruppe (G) oder das Verhältnis "R*" konstant ist, wie die betrachtete Querschnittsebene (P) auch sei.

3. Körper nach einem der vorhergehenden Ansprüche,
**dadurch gekennzeichnet,**
**dass** der Querschnitt des Eintrittskanals (50) oder des Austrittskanals (52) der Gruppe (G) oder die mittlere Dicke "E" oder die minimale Dicke "Eₘᵢₙ" auf der gesamten Länge (L) des Filterblocks (11) konstant ist.

4. Filterkörper nach einem der vorhergehenden Ansprüche,
**dadurch gekennzeichnet,**
**dass** das Verhältnis "R" der mittleren Dicke "E" der Gesamtheit der äusseren Zwischenwände (44, 54) der Gruppe (G) zur mittleren Dicke "e" der Gesamtheit der inneren Zwischenwände (46, 56) der Gruppe (G) oder das Verhältnis "R*" zwischen 1,9 und 2,1 liegt.

5. Filterkörper nach einem der vorhergehenden Ansprüche,
**dadurch gekennzeichnet,**
**dass** die mittlere Dicke der äusseren Zwischenwand des Austrittskanals der Gruppe (G) größer ist als die mittlere Dicke der externen Zwischenwand des Eintrittskanals der Gruppe (G).

6. Filterkörper nach einem der vorhergehenden Ansprüche,
**dadurch gekennzeichnet,**
**dass** in einer beliebigen Querschnittsebene (P) alle Eintrittskanäle (14e) einen identischen Querschnitt haben und alle Austrittskanäle (14s) einen identischen Querschnitt aufweisen, wobei der Querschnitt der Eintrittskanäle von einer größeren Fläche ist als der der Ausgangskanäle.

7. Filterkörper nach einem der vorhergehenden Ansprüche;
**dadurch gekennzeichnet,**
**dass** er mindestens einen Eintrittskanal (14e) und einen Ausgangskanal (14s) aufweist, welche durch ein nicht ebenes Zwischenwandelement (40) voneinander getrennt sind.

8. Filterkörper nach Anspruch 7,
**dadurch gekennzeichnet,**
**dass** das nicht ebene Zwischenwandelement (40) im Querschnitt mindestens eine Seite vorstellt, die eine sinusförmige oder eine bereichsweise sinusförmig Form hart.

9. Filterkörper nach einem der vorhergehenden Ansprüche,
**dadurch gekennzeichnet,**
**dass** die äusseren Zwischenwände (44, 54) der Gruppe (G) eine ebene äussere Seite darstellen.

10. Filterkörper nach einem der vorhergehenden Ansprüche,
**dadurch gekennzeichnet,**
**dass** jede Gesamtheit der beiden äusseren und benachbarten Kanäle, die keinen Kanal (14p₁) aufweisen, welcher eine Kante des Filterblocks begrenzt, eine besagte Gruppe (G) ist.

11. Filterkörper nach einem der vorhergehenden Ansprüche,
**dadurch gekennzeichnet,**
**dass** jede Gesamtheit der beiden benachbarten äusseren Kanäle des Filterblocks, die einen Kanal aufweist, der eine Kante des Filterblocks begrenzt, eine Gruppe (G) ist.

12. Filterkörper nach einem der vorhergehenden Ansprüche,
**dadurch gekennzeichnet,**
**dass** in der schnittebene (P) die minimale Dicke einer äusseren Zwischenwand (30) des Filterblocks (11) gleich ist der Dicke "Eₘᵢₙ" einer beliebigen Gruppe der beiden benachbarten äusseren Kanäle, welche nicht eine Kante des Filterblocks begrenzen.

13. Filterkörper nach einem der vorhergehenden Ansprüche,
**dadurch gekennzeichnet,**
**dass** mindestens die Gruppen der beiden benachbarten äusseren Kanäle, die einen Winkelkanal des Filterblocks aufweisen einer Gruppe (G) zugehören.

14. Filterkörper nach dem vorhergehenden Anspruch,
**dadurch gekennzeichnet,**
**dass** alle Gruppen (G) des Filterblocks, die einen Winkelkanal aufweisen, ein Verhältnis R der mittleren Dicke "E" der Gesamtheit der äusseren Zwischenwände (44, 54) der Gruppe (G) zur mittleren Dicke "e" der Gesamtheit der internen Zwischenwände (46, 56) der Gruppe (G) oder ein Verhältnis R* aufweisen, das identisch ist.

15. Filterkörper nach einem der vorhergehenden Ansprüche,
**dadurch gekennzeichnet,**
**dass** die Zwischenwandelemente der äusseren Zwischenwände der Winkelkanäle des Filterblocks ein Profil aufweisen, das identisch ist dem Profil der Zwischenwandelemente der äusseren Zwischenwände der Kanäle vom gleichen Typ von Gruppen, die keinen Winkelkanal aufweisen.

16. Filterkörper nach einem der vorhergehenden Ansprüche,
**dadurch gekennzeichnet,**
**dass** der Filterblock eine Verstärkungszwischenwand aufweist, deren Dicke an die Intensität der lokalen thermomechanischen Belastungen angepasst ist.

17. Filterkörper nach einem der vorhergehenden Ansprüche, welcher lokal eine Struktur der Gruppen (G) bildet, dass heißt, dass sie lokale Überdicken aufweist, wobei diese Überdicken gleichmäßig versetzt sind.

18. Filterkörper nach einem der vorhergehenden Ansprüche,
**dadurch gekennzeichnet,**
**dass** der Filterblock die Form eines parallelepipedischen Rechtecks aufweist.

19. Filterkörper nach der vorhergehenden Ansprüche, wobei der Filterblock durch Extrusion hergestellt ist.

20. Filterkörper nach einem der vorhergehenden Ansprüche, bei dem die Dicke der inneren Zwischenwände der äusseren Kanäle des Filterblocks identisch ist zur Dicke der Zwischenwände der inneren Kanäle des Filterblocks.

21. Filterkörper nach einem der vorhergehenden Ansprüche, in welchem der Filterblock Gesamtheiten von Eintrittskanälen (14e) und Austrittskanälen (14s) aufweist, die einander benachbart sind, die im Verhältnis zueinander derart angeordnet sind, dass die Gesamtheit des Gases, welches durch einen beliebigen Eintrittskanal gefiltert ist, durch Ausgangskanäle geleitet wird, welche zum Eingangskanal benachbart sind.
